# EUROPÄISCHE PATENTSCHRIFT

(11) **EP 2 110 468 B1**
(45) Veröffentlichungstag und Bekanntmachung des Hinweises auf die Patenterteilung: **08.04.2015**
(21) Anmeldenummer: 09002160.1
(22) Anmeldetag: 16.02.2009
(51) Int. Cl.: D01F 2/24, C08L 1/08

(54) **Cellulosecarbamat-Spinnlösung, Cellulosecarbamatfaser sowie Verfahren zu deren Herstellung und Verwendungszwecke**
Cellulose carbamate spinning solution, cellulose carbamate fibre, method for creating same and applications
Solution de filage de carbamate de cellulose, fibre de carbamate de cellulose, son procédé de fabrication et son utilisation

(30) Priorität: 14.04.2008 DE 102008018743
(43) Veröffentlichungstag der Anmeldung: 21.10.2009
(73) Patentinhaber: Fraunhofer-Gesellschaft zur Förderung der angewandten Forschung e.V., 80686 München (DE)
(72) Erfinder: Ebeling, Horst, Dr., 14727 Premnitz (DE); Fink, Hans-Peter, Dr., 14513 Teltow (DE)
(74) Vertreter: Pfenning, Meinig & Partner GbR

(56) Entgegenhaltungen:
- DE-A1-102005 029 793
- DE-B3-102004 031 025
- US-A- 4 404 369
- US-A1- 2008 023 874
- SUSANN BARTHEL AND THOMAS HEINZE: "Acylation and carbanilation of cellulose in ionic liquids" GREEN CHEMISTRY, ROYAL SOCIETY OF CHEMISTRY, CAMBRIDGE, GB, Bd. 8, 1. Januar 2006 (2006-01-01), Seiten 301-306, XP009105137 ISSN: 1463-9262

## Beschreibung

Die Erfindung betrifft ein Verfahren zur Herstellung von Cellulosecarbamatfasern, bei dem eine Lösung von Cellulosecarbamat in einer ionischen Flüssigkeit durch die Löcher einer Spinndüse gedrückt wird. Die geformten Fasern werden an der Luft verstreckt und in einem wässrigen Bad das Cellulosecarbamat regeneriert. Durch Waschen wird das Lösemittel abgetrennt und die Faser anschließend getrocknet.

Die Herstellung von cellulosischen Fasern nach dem Viskoseprozess ist noch immer das meist genutzte Verfahren (K. Götze, "Chemiefasern nach dem Viskoseverfahren", Springer Verlag, Berlin-Heidelberg-New York 1967). Da das Viskoseverfahren mit erheblichen Umweltbelastungen, z.B. durch Schwefelkohlenstoff, Schwefelwasserstoff, Schwermetalle, sowie hohen Investitionskosten verbunden ist, werden bereits seit Jahren Anstrengungen unternommen, das Viskoseverfahren durch alternative Verfahren abzulösen. Entwickelt wurden Verfahren auf Basis des direkten Lösens von Zellstoff in einem geeigneten Lösungsmittel bzw. alternative Derivatisierungsvarianten ohne Schwefelkohlenstoff.

Von der Einführungszeit vergleichbar zum Viskoseverfahren ist das Cuproammoniumverfahren, das auf der Löslichkeit von Zellstoff in Kupferoxidammoniak basiert (Ullmann's Encyclopedia of Industrial Chemistry: Cellulose - 3.3 Cuprammonium Fibres).

Ein eingeführtes Verfahren (Tencel^{®}) zur Herstellung von Cellulosefasern ist das Verspinnen von Lösungen der Cellulose in Aminoxiden, vorzugsweise in N-**Methyl-Morpholin-N-Oxid** (NMMO), nicht zuletzt deshalb, weil damit der umständliche Weg über die Derivatisierung der Cellulose vermieden wird. Aus der DE 28 30 685 und der US 3,767,756 sowie der EP 0 490 870 ist bekannt, dass Cellulose in einem NMMO-Wasser-System löslich ist und durch Spinnen in eine meist wässrige NMMO-Lösung zu textilen Fasern verarbeitet werden kann.

Eine weitere bekannte Möglichkeit zur Herstellung von Formkörpern aus Regeneratcellulose besteht im Ausfällen einer Lösung von Cellulosecarbamat (EP 57 105, EP 178 292), das durch Umsetzung von Cellulose mit Harnstoff gebildet wird. Cellulosecarbamat ist in kalter Natronlauge löslich und kann in erwärmter Natronlauge wieder zu Cellulose regeneriert werden. Nachteilig für die Produktivität der beschriebenen Cellulose-Nassspinnverfahren ist die geringe Feststoffkonzentration der Cellulose in der Spinnlösung, die in der Regel 8 bis 15 % beträgt.

Die Anwendung von Konzentrationen oberhalb 20 % für die Herstellung cellulosischer Fasern auf Basis der Extrusion von Lösungen von Cellulosecarbamat in NMMO wird in der DE 10 2004 007 616 beschrieben. Nachteilig wirken sich bei diesem Verfahren die hohen Spinnlösungsviskositäten aus. Die Spinnlösungsherstellung erfolgt durch Quellen des Cellulosecarbamats in einer 40 bis 70 %-igen Mischung NMMO/Wasser und anschließendem Abdestillieren von Wasser, was erhebliche Lösezeiten und einen höheren Energiebedarf erfordert.

Als weiteres Lösungsmittel für Cellulose wurden in jüngerer Zeit die ionischen Flüssigkeiten beschrieben. Ionische Flüssigkeiten sind Salze, die aus einem cyclischen, meist stickstoffhaltigen Kation und einem organischen oder anorganischen Anion aufgebaut sind und einen Schmelzpunkt unter 100 °C besitzen. Möglichkeiten zur Synthese von ionischen Flüssigkeiten, der Einsatz als Medium in chemischen Umsetzungen und auch als Lösungsmittel für Cellulose sowie die Verformung dieser Lösungen zu Fasern sind in nachfolgend genannter Veröffentlichung beschrieben (G. Laus, G. Bentivoglio, H. Schottenberger, V. Kahlenberg, H. Kopacka, T. Röder, H. Sixta "Ionic Liquids: Current Developments, Potential and Drawbacks for Industrial Applications" in Lenzinger Berichte, 84(2005) 71-85).

In der WO 2006/000197 werden Verfahren und Vorrichtung zur Herstellung von Formkörpern aus Lösungen von Cellulose in ionischen Flüssigkeiten beschrieben. Die Zellstoffe werden hier in Wasser aufgeschlagen und in feuchter Form dem Löseprozess zugeführt. Das bedeutet, dass das Wasser während des Lösens entfernt werden muss, wodurch die Lösezeit und der Energiebedarf beeinflusst werden. Die beschriebenen Spinnlösungen mit Konzentrationen bis zu 20 % haben sehr hohe Nullscherviskositäten.

S. Barthel und T. Heinze beschreiben in Grenn Cam., 2006, 8,301-306 die Acylierung und Carbannelierung von Cellulose in ionischen Flüssigkeiten.

Die US 2008/0023874 A1 betrifft reißfeste Fasern aus Cellulosecarbamat oder Cellulose sowie deren Herstellung, bei dem eine Lösung aus Cellulosecarbamat in N-Methylmorrpholin-N-Oxid extrudiert wird.

Zudem betrifft die DE 10 2005 029 793 A1 ein Verfahren zur Herstellung von Vliesstoffen, bei dem eine Lösung von Cellulosecarbamat in N-Methylmorpholin-N-Oxid durch die Löcher eines Düsenbalkens gedrückt wird und durch einen Luftstrom um ein Vielfaches verstreckt wird.

Aus der US 4,404,369 ist ein Alkalilösliches Cellulosederivat bekannt, das durch Behandlung von Cellulose mit flüssigem Ammoniak, worin Harnstoff gelöst ist, erhältlich ist.

Die DE 10 2004 031 025 B3 beschreibt ein Verfahren und eine Vorrichtung zur Herstellung von Formkörpern aus Cellulose.

Ausgehend hiervon war es Aufgabe der vorliegenden Erfindung, ein im Vergleich zu bestehenden Verfahren umweltfreundliches Verfahren zur Herstellung von qualitativ hochwertigen Cellulosecarbamatfasern bereitzustellen, das den Ansprüchen hinsichtlich geringer Investitions- und Produktionskosten durch hohe Lösungskonzentrationen genügt.

Diese Aufgabe wird bezüglich des Verfahrens zur Herstellung von gesponnenen Cellulosecarbamatfasern mit den Merkmalen des Patentanspruchs 1 gelöst. Die weiteren abhängigen Ansprüche zeigen vorteilhafte Weiterbildungen auf.

Erfindungsgemäß wird somit ein Verfahren zur Herstellung von Cellulosecarbamatfasern bereitgestellt, bei dem eine Spinnlösung durch eine mindestens eine Öffnung aufweisende Spinndüse gepresst, der dabei gebildete Spinnlösungs-Faden in einem Luftspalt verstreckt und anschließend in einem Fällbad koaguliert wird.

Beim erfindungsgemäßen Verfahren wird somit eine hochkonzentrierte Lösung von Cellulosecarbamat in einer ionischen Flüssigkeit mittels Extrusion aus einer Düse unter Reckung in einem Luftspalt in ein Koagulationsbad verformt.

Bei der erfindungsgemäß eingesetzten Spinnlösung aus Cellulosecarbamat ist das Cellulosecarbamat in mindestens einer ionischen Flüssigkeit gelöst. Erfindungsgemäß beträgt dabei die Cellulosecarbamatkonzentration der Spinnlösung mindestens 15 Gew.-% und die Nullscherviskosität, gemessen bei 100 °C, liegt dabei in einem Bereich von 50 bis 7500 Pas.

Überraschenderweise zeigte sich, dass Cellulosecarbamat sich bis zu hohen Konzentrationen in ionischen Flüssigkeiten löst und zu Fasern mit hohen Festigkeiten verformt werden kann. Ebenfalls überraschend zeigte sich, dass die hochkonzentrierten Lösungen verglichen zu Cellulose in ionischen Flüssigkeiten und auch zu Cellulosecarbamat in NMMO weitaus geringere Nullscherviskositäten bei der Verarbeitungstemperatur besitzen.

Zur Herstellung der Spinnlösung wird Cellulosecarbamat unter Rühren oder Kneten bei Temperaturen oberhalb 80 °C in einer ionischen Flüssigkeit gelöst und die resultierende Spinnlösung filtriert.

Vorzugsweise wird getrocknetes Cellulosecarbamat zur Spinnlösungsherstellung eingesetzt und die Spinnlösung durch mechanische Vermischung bei Temperaturen zwischen 80 und 120 °C, bevorzugt zwischen 90 und 100 °C gebildet. Bei Verwendung von wasserhaltigem Cellulosecarbamat erfolgt das Lösen durch Kneten bei gleichzeitigem Entzug des Wassers unter reduziertem Druck, z.B. kleiner 0,9 bar.

In einer vorteilhaften Ausführungsform liegt der Schmelzpunkt der mindestens einen ionischen Flüssigkeit unter 100 °C, bevorzugt unter 75 °C, besonders bevorzugt unter 50 °C.

Die mindestens eine ionische Flüssigkeit ist dabei erfindungsgemäß ausgewählt aus der Gruppe bestehend aus Ammonium-, Pyrazolium-, Cholinium-, in 1- und 3-Stellung alkyl- oder arylsubstituierten Imidazoliumverbindungen und/oder Mischungen hieraus, insbesondere Butyl-methyl-imidazoliumacetat, Butyl-methyl-imidazoliumchlorid, Ethyl-methyl-imidazoliumchlorid, Ethyl-methyl-imidazoliumacetat, Butyl-ethyl-imidazoliumacetat, Butyl-ethyl-imidazoliumchlorid, Methyl-tetradecylimidazoliumchlorid, Butyl-methyl-imidazoliumbromid, Butyl-methyl-pyridiniumchlorid, Butyl-methylimidazoliumthiocyanat, Ethyl-methyl-imidiazoliumthiocyanat, Butyl-ethyl-imidazoliumthiocyanat, Hexyl-dimethyl-imidazoliumhexafluoroborat, Ethoxymethyl-methyl-pyrrolidiniumchlorid, Hydroxypropyl-methyl-imidazoliumacetat, Hydroxypropyl-methyl-imidazoliumchlorid und/oder Butyl-methyl-pyridiniumchlorid.

Erfindungsgemäß weist das Cellulosecarbamat einen DP_{cuoxam} von 150 bis 750, bevorzugt von 250 bis 550 auf.

Ebenso ist es bevorzugt, wenn das Cellulosecarbamat einen Substitutionsgrad DS_{carbamat} von 0,1 bis 1, bevorzugt von 0,2 bis 0,6 aufweist.

Als besonderer Vorteil der vorliegenden Erfindung ist hervorzuheben, dass sich durch Lösen des Cellulosecarbamats in einer ionischen Flüssigkeit hohe Konzentrationen des Cellulosecarbamats in Lösung einstellen lassen. So kann die CellulosecarbamatKonzentration hohe Konzentrationswerte, vorteilhaft zwischen 20 und 50 Gew.-%, weiter bevorzugt zwischen 20 und 40 Gew.-%, besonders bevorzugt zwischen 20 und 30 Gew.-% einnehmen.

Weitere Vorteile der Spinnlösung sind darin zu sehen, dass sich trotz des hohen Cellulosecarbamat-Gehaltes geringe Nullscherviskositäten ergeben. Bevorzugte Bereiche der Nullscherviskosität, gemessen bei 100 °C, liegen dabei im Bereich von 50 bis 5000 Pas, bevorzugt von 150 bis 2500 Pas und besonders bevorzugt von 250 bis 1250 Pas.

Vorzugsweise wird Cellulosecarbamat unter Rühren oder Kneten bei Temperaturen oberhalb 80 °C in einer ionischen Flüssigkeit gelöst, die resultierende Spinnlösung filtriert und anschließend durch die Löcher einer Düse gepresst. Die entstehenden Fäden oder Flächengebilde können mit Geschwindigkeiten größer 50 m/min über einen Luftspalt und ein nachfolgendes Koagulationsbad abgezogen werden. Im Luftspalt erfolgt vorzugsweise ein Verzug auf ein Vielfaches der ursprünglichen Länge und im Koagulationsbad wird der Carbamatgebilde koaguliert und dabei ein Teil des Lösungsmittels entfernt. Anschließend wird das restliche Lösungsmittel vorzugsweise im Gegenstromprinzip ausgewaschen und das Produkt getrocknet.

Beim Verfahren kommen vorteilhafterweise Spinndüsen zum Einsatz, deren 1/d-Verhältnis, also das Verhältnis zwischen der Länge des Spinndüsen-Loches zum Durchmesser 2 bis 20, bevorzugt 6 bis 15 beträgt.

Weiterhin ist es vorteilhaft, wenn die Breite des Luftspaltes von 5 bis 250 mm beträgt.

Als Fällbad kommt vorzugsweise eine wässrige Lösung mindestens einer ionischen Flüssigkeit zum Einsatz. Hierbei ist es bevorzugt, wenn die Gewichtskonzentration der mindestens einen ionischen Flüssigkeit in der wässrigen Lösung 0,5 bis 50 Gew.-%, bevorzugt 2 bis 25 Gew.-% beträgt.

Die Temperatur der Spinnlösung beim Spinnprozess wird vorzugsweise auf einen Temperaturbereich von 50 bis 150 °C, bevorzugt von 80 bis 120 °C eingestellt. Insbesondere wird die Spinnlösung dabei nach einem Dry/Wet-Jet-Verfahren zu Fasern versponnen.

Es werden ebenso Cellulosecarbamatfasern beschrieben, die sich nach einem zuvor beschriebenen Verfahren herstellen lassen. Die Fasern zeichnen sich durch eine sehr hohe Festigkeit aus.

Die Fasern können durch Variation der Regenerierungsbedingungen mit variierendem N-Gehalt hergestellt werden und besitzen in Abhängigkeit vom N-Gehalt ein unterschiedliches Wasseraufnahmevermögen.

Insbesondere beträgt die Festigkeit der Cellulosecarbamatfasern mindestens 30 cN/tex, bevorzugt mindestens 50 cN/tex, gemessen nach DIN 53834.

Ebenso zeichnen sich die Fasern durch einen hohen E-Modul aus, der vorzugsweise 1.500 cN/tex, bevorzugt mindestens 2500 cN/tex beträgt.

Der Stickstoffgehalt der Fasern kann dabei bevorzugt in einem Bereich zwischen 0,01 und 7 Gew.-%, bevorzugt zwischen 0,5 und 5 Gew.-% variieren.

Verwendungsmöglichkeiten der Cellulosecarbamatfasern sind dabei Precursor für technische Fasern, insbesondere zur Herstellung von Kohlenstofffasern oder Verstärkungsfasern für Kunststoffe oder Composite.

Anhand der nachfolgenden Beispiele soll der erfindungsgemäße Gegenstand näher erläutert werden, ohne diesen auf die hier gezeigten speziellen Ausführungsformen einschränken zu wollen.

### Ausführungsbeispiele

### Beispiel 1

20 g Cellulosecarbamat (DPcuox: 258, DS 0,4) werden mit 80 g Butyl-methyl-imidazoliumacetat gemischt und in einem Horizontalkneter bei 110 °C in 2 Std. gelöst. Die resultierende homogene, dunkelbraune Lösung ist völlig faserfrei. Die Viskosität der Lösung, gemessen bei 100 °C beträgt 64 Pas.

Die Lösung wurde mittels Extruder durch eine 12-Loch-Spinndüse (Lochdurchmesser 150 µm) gepresst, mit einem Verzugsverhältnis von 30 im Luftspalt verstreckt und im wässrigen Koagulationsbad mit 12 % Butyl-methyl-imidazoliumacetat die Cellulosecarbamatfaser ausgefällt. Die Filamente wurden mit Weichwasser ausgewaschen und bei 90 °C getrocknet.

Die Filamente hatten eine Festigkeit von 52 cN/tex, eine Dehnung von 9 % und einen Modul von 2500 cN/tex.

### Beispiel 2

30 g Cellulosecarbamat (DPcuox: 258, DS 0,4) werden mit 70 g Butyl-methyl-imidazoliumacetat gemischt und in einem Horizontalkneter bei 110 °C in 2 Std. gelöst. Die resultierende homogene, dunkelbraune Lösung ist völlig faserfrei. Die Viskosität der Lösung, gemessen bei 100 °C beträgt 1210 Pas.

Die Lösung wurde mittels Extruder durch eine 12-Loch-Spinndüse (Lochdurchmesser 150 µm) gepresst, mit einem Verzugsverhältnis von 35 im Luftspalt verstreckt und im wässrigen Koagulationsbad mit 15 % Butyl-methyl-imidazoliumacetat die Cellulosecarbamatfaser ausgefällt. Die Filamente wurden mit Weichwasser ausgewaschen und bei 90 °C getrocknet.

Die Filamente hatten eine Festigkeit von 62 cN/tex, eine Dehnung von 8 % und einen Modul von 2970 cN/tex.

### Beispiel 3

20 g Cellulosecarbamat (DPcuox: 258, DS 0,4) werden mit 80 g Butyl-methyl-imidazoliumchlorid gemischt und in einem Horizontalkneter bei 110 °C in 2 Std. gelöst. Die resultierende homogene, gelbliche Lösung ist völlig faserfrei. Die Viskosität der Lösung, gemessen bei 100 °C, beträgt 504 Pas.

Die Lösung wurde mittels Extruder durch eine 12-Loch-Spinndüse (Lochdurchmesser 150 µm) gepresst, mit einem Verzugsverhältnis von 30 im Luftspalt verstreckt und im wässrigen Koagulationsbad mit 12 % Butyl-methyl-imidazoliumchlorid die Cellulosecarbamatfaser ausgefällt. Die Filamente wurden mit Weichwasser ausgewaschen und bei 90 °C getrocknet.

Die Filamente hatten eine Festigkeit von 58 cN/tex, eine Dehnung von 11 % und einen Modul von 2400 cN/tex.

### Beispiel 4 (Vergleichsbeispiel)

15 g eines Vorhydrolyse-Kraft-Zellstoffs (DPcuox: 552) werden in Wasser aufgeschlagen und anschließend mit 85 g Butyl-methyl-imidazoliumacetat gemischt und in einem Horizontalkneter bei 150 mbar bei 80 bis 85 °C in 3 Std. gelöst. Die resultierende homogene braune Lösung ist faserfrei. Die Viskosität der Lösung, gemessen bei 100 °C, beträgt 1649 Pas.

Die Lösung wurde mittels Extruder durch eine 12-Loch-Spinndüse (Lochdurchmesser 150 µm) gepresst, mit einem Verzugsverhältnis von 30 im Luftspalt verstreckt und im wässrigen Koagulationsbad mit 12 % Butyl-methyl-imidazoliumacetat die Cellulosefaser ausgefällt. Die Filamente wurden mit Weichwasser ausgewaschen und bei 90 °C getrocknet.

Die Filamente hatten eine Festigkeit von 41 cN/tex, eine Dehnung von 9 % und einen Modul von 1 590 cN/tex.

## Patentansprüche

1. Verfahren zur Herstellung von gesponnenen Cellulosecarbamatfasern, wobei eine Cellulosecarbamat-Spinnlösung mit einer Nullscherviskosität, gemessen bei 100 °C, im Bereich von 50 bis 7500 Pas, enthaltend eine Lösung von Cellulosecarbamat mit einem DP_{cuoxam} von 150 bis 750 in mindestens einer ionischen Flüssigkeit, ausgewählt aus der Gruppe bestehend aus Ammonium-, Pyrazolium-, Cholinium-, in 1- und 3-Stellung alkyl- oder arylsubstituierten Imidazoliumverbindungen und/oder Mischungen hieraus, mit einer Cellulosecarbamatkonzentration der Spinnlösung von mindestens 15 Gew.-%, durch eine mindestens eine Öffnung aufweisende Spinndüse gepresst, der dabei gebildete Spinnlösungs-Faden in einem Luftspalt verstreckt und anschließend in einem Fällbad koaguliert wird.

2. Verfahren nach vorhergehendem Anspruch, **dadurch gekennzeichnet, dass** die mindestens eine ionische Flüssigkeit einen Schmelzpunkt unter 100 °C, bevorzugt einen Schmelzpunkt unter 75 °C, besonders bevorzugt einen Schmelzpunkt unter 50 °C aufweist.

3. Verfahren nach Anspruch 1, **dadurch gekennzeichnet, dass** die ionische Flüssigkeit ausgewählt ist aus der Gruppe bestehend aus Butyl-methylimidazoliumacetat, Butyl-methyl-imidazoliumchlorid, Ethyl-methyl-imidazoliumchlorid, Ethyl-methyl-imidazoliumacetat, Butyl-ethyl-imidazoliumacetat, Butyl-ethyl-imidazoliumchlorid, Methyl-tetradecylimidazoliumchlorid, Butyl-methyl-imidazoliumbromid, Butyl-methylimidazoliumthiocyanat, Ethyl-methyl-imidiazoliumthiocyanat, Butylethyl-imidazoliumthiocyanat, Hydroxypropyl-methyl-imidazoliumacetat, Hydroxypropyl-methyl-imidazoliumchlorid und/oder Butylmethyl-pyridiniumchloridund/oder Ethoxymethyl-methyl-pyrrolidiniumchlorid.

4. Verfahren nach einem der vorhergehenden Ansprüche, **dadurch gekennzeichnet, dass** das Cellulosecarbamat einen DP_{cuoxam} von 250 bis 550 aufweist.

5. Verfahren nach einem der vorhergehenden Ansprüche, **dadurch gekennzeichnet, dass** das Cellulosecarbamat einen Substitutionsgrad DS_{carbamat} von 0,1 bis 1, bevorzugt von 0,2 bis 0,6 aufweist.

6. Verfahren nach einem der vorhergehenden Ansprüche, **dadurch gekennzeichnet, dass** die Cellulosecarbamatkonzentration zwischen 20 und 50 Gew.-%, bevorzugt zwischen 20 und 40 Gew.-%, besonders bevorzugt zwischen 20 und 30 Gew.-% beträgt.

7. Verfahren nach einem der vorhergehenden Ansprüche, **dadurch gekennzeichnet, dass** zur Herstellung der Spinnlösung getrocknetes Cellulosecarbamat verwendet wird.

8. Verfahren nach einem der Ansprüche 1 bis 7, **dadurch gekennzeichnet, dass** zur Herstellung der Spinnlösung wasserhaltiges Cellulosecarbamat eingesetzt wird und der Lösevorgang bei reduziertem Druck kleiner 0,9 bar durchgeführt wird.

9. Verfahren nach einem der vorhergehenden Ansprüche, **dadurch gekennzeichnet, dass** das l/d-Verhältnis der Spinndüse von 2 bis 20, bevorzugt von 6 bis 15 beträgt.

10. Verfahren nach einem der vorhergehenden Ansprüche, **dadurch gekennzeichnet, dass** die Breite des Luftspaltes von 5 bis 250 mm beträgt.

11. Verfahren nach einem der Ansprüche 1 bis 10, **dadurch gekennzeichnet, dass** als Fällbad eine wässrige Lösung mindestens einer ionischen Flüssigkeit eingesetzt wird.

12. Verfahren nach vorhergehendem Anspruch, **dadurch gekennzeichnet, dass** die Gewichtskonzentration der mindestens einen ionischen Flüssigkeit in der wässrigen Lösung von 0,5 bis 50 Gew.-%, bevorzugt von 2 bis 25 Gew.-% beträgt.

13. Verfahren nach einem der vorhergehenden Ansprüche, **dadurch gekennzeichnet, dass** die Temperatur der Spinnlösung von 50 bis 150 °C, bevorzugt von 80 bis 120 °C beträgt.

## Claims

1. Method for the production of spun cellulose carbamate fibres, a cellulose carbamate spinning solution with a zero shear viscosity, measured at 100°C, in the range of 50 to 7,500 Pas, comprising a solution of cellulose carbamate with a DP_{cuoxam} of 150 to 750 in at least one ionic liquid, selected from the group consisting of ammonium-, pyrazolium-, cholinium compounds, imidazolium compounds which are alkyl- or aryl-substituted in 1- and 3- position and/or mixtures hereof, with a cellulose carbamate concentration of the spinning solution of at least 15% by weight, being pressed through a spinning nozzle which has at least one opening, the spinning solution thread thereby formed being stretched in an air gap and subsequently coagulated in a regenerating bath.

2. Method according to the preceding claim, **characterised in that** the at least one ionic liquid has a melting point below 100°C, preferably a melting point below 75°C, particularly preferred a melting point below 50°C.

3. Method according to claim 1, **characterised in that** the ionic liquid is selected from the group consisting of butyl methylimidazolium acetate, butyl methylimidazolium chloride, ethyl methylimidazolium chloride, ethyl methylimidazolium acetate, butyl ethylimidazolium acetate, butyl ethylimidazolium chloride, methyl tetradecylimidazolium chloride, butyl methylimidazolium bromide, butyl methylimidazolium thiocyanate, ethyl methylimidazolium thiocyanate, butyl ethylimidazolium thiocyanate, hydroxypropyl methylimidazolium acetate, hydroxypropyl methylimidazolium chloride and/or butyl methylpyridinium chloride and/or ethoxymethyl methylpyrrolidinium chloride.

4. Method according to one of the preceding claims, **characterised in that** the cellulose carbamate has a DP_{cuoxam} of 250 to 550.

5. Method according to one of the preceding claims, **characterised in that** the cellulose carbamate has a degree of substitution DS_{carbamate} of 0.1 to 1, preferably of 0.2 to 0.6.

6. Method according to one of the preceding claims, **characterised in that** the cellulose carbamate concentration is between 20 and 50% by weight, preferably between 20 and 40% by weight, particularly preferred between 20 and 30% by weight.

7. Method according to one of the preceding claims, **characterised in that** dried cellulose carbamate is used for the production of the spinning solution.

8. Method according to one of the claims 1 to 7, **characterised in that** water-containing cellulose carbamate is used for the production of the spinning solution and the dissolving process is implemented at reduced pressure of less than 0.9 bar.

9. Method according to one of the preceding claims, **characterised in that** the l/d ratio of the spinning nozzle is from 2 to 20, preferably from 6 to 15.

10. Method according to one of the preceding claims, **characterised in that** the width of the air gap is from 5 to 250 mm.

11. Method according to one of the claims 1 to 10, **characterised in that** an aqueous solution of at least one ionic liquid is used as regenerating bath.

12. Method according to the preceding claim, **characterised in that** the weight concentration of the at least one ionic liquid in the aqueous solution is from 0.5 to 50% by weight, preferably from 2 to 25% by weight.

13. Method according to one of the preceding claims, **characterised in that** the temperature of the spinning solution is from 50 to 150°C, preferably from 80 to 120°C.

## Revendications

1. Procédé de fabrication de fibres filées de carbamate de cellulose, dans lequel une solution à filer de carbamate de cellulose, ayant une viscosité à cisaillement nul, mesurée à 100°C, comprise dans la plage de 50 à 7500 Pa.s, contenant une solution de carbamate de cellulose ayant un DP_{cuoxam} de 150 à 750 dans au moins un liquide ionique choisi dans le groupe consistant en les composés de l'ammonium, du pyrazolium, du cholinium, de l'imidazolium à substitution alkyle ou aryle en positions 1 et 3, et/ou les mélanges de ceux-ci, ayant une concentration du carbamate de cellulose dans la solution à filer d'au moins 15 % en poids, est pressée à travers une buse de filage présentant au moins une ouverture, on étire dans une fente d'air le fil de la solution à filer formée à cette occasion, puis on le coagule dans un bain de précipitation.

2. Procédé selon la revendication précédente, **caractérisé en ce que** le ou les liquide(s) ionique(s) présente(nt) un point de fusion inférieur à 100°C, de préférence un point de fusion inférieur à 75°C, d'une manière particulièrement préférée un point de fusion inférieur à 50°C.

3. Procédé selon la revendication 1, **caractérisé en ce que** le liquide ionique est choisi dans le groupe consistant en l'acétate de butyl-méthyl-imidazolium, le chlorure de butyl-méthyl-imidazolium, le chlorure d'éthyl-méthyl-imidazolium, l'acétate d'éthyl-méthyl-imidazolium, l'acétate de butyl-éthyl-imidazolium, le chlorure de butyl-éthyl-imidazolium, le chlorure de méthyl-tétradécyl-imidazolium, le bromure de butyl-méthyl-imidazolium, le thiocyanate de butyl-méthyl-imidazolium, le thiocyanate d'éthyl-méthyl-imidazolium, le thiocyanate de butyl-éthyl-imidazolium, l'acétate d'hydroxypropyl-méthyl-imidazolium, le chlorure d'hydroxypropyl-méthyl-imidazolium et/ou le chlorure de butyl-méthyl-pyridinium et/ou le chlorure d'éthoxylméthyl-méthyl-pyrrolidinium.

4. Procédé selon l'une des revendications précédentes, **caractérisé en ce que** le carbamate de cellulose a un DP_{cuoxam} de 250 à 550.

5. Procédé selon l'une des revendications précédentes, **caractérisé en ce que** le carbamate de cellulose présente un degré de substitution DS_{carbamate} de 0,1 à 1, de préférence de 0,2 à 0,6.

6. Procédé selon l'une des revendications précédentes, **caractérisé en ce que** la concentration du carbamate de cellulose est comprise entre 20 et 50 % en poids, de préférence entre 20 et 40 % en poids, d'une manière particulièrement préférée entre 20 et 30 % en poids.

7. Procédé selon l'une des revendications précédentes, **caractérisé en ce que**, pour la fabrication de la solution à filer, on utilise du carbamate de cellulose séché.

8. Procédé selon l'une des revendications 1 à 7, **caractérisé en ce que**, pour fabriquer la solution à filer, on utilise un carbamate de cellulose contenant de l'eau, et on met en oeuvre l'opération de filage sous une pression réduite, inférieure à 0,9 bar.

9. Procédé selon l'une des revendications précédentes, **caractérisé en ce que** le rapport l/d de la buse de filage est de 2 à 20, de préférence de 6 à 15.

10. Procédé selon l'une des revendications précédentes, **caractérisé en ce que** la largeur de la fente d'air est de 5 à 250 mm.

11. Procédé selon l'une des revendications 1 à 10, **caractérisé en ce qu'**on utilise en tant que bain de précipitation une solution aqueuse d'au moins un liquide ionique.

12. Procédé selon la revendication précédente, **caractérisé en ce que** la concentration pondérale du ou des liquide(s) ionique(s) dans la solution aqueuse est de 0,5 à 50 % en poids, de préférence de 2 à 25 % en poids.

13. Procédé selon l'une des revendications précédentes, **caractérisé en ce que** la température de la solution à filer est de 50 à 150°C, de préférence de 80 à 120°C.
